# EUROPÄISCHE PATENTANMELDUNG

(11) **EP 0 728 664 A1**
(43) Veröffentlichungstag der Anmeldung: **28.08.1996**
(21) Anmeldenummer: 95120163.1
(22) Anmeldetag: 20.12.1995
(51) Int. Cl.: B65B 1/12, B65G 53/08

(54) **Vorrichtung zum Verdichten von körnigem Gut**

(30) Priorität: 22.02.1995 DE 29502986 U
(71) Anmelder: Probat-Werke von Gimborn Maschinenfabrik GmbH, D-46446 Emmerich (DE)
(72) Erfinder: Hansen, Theodor E., NL-7071 TJ Ulft (NL)
(74) Vertreter: Liska, Horst, Dr.-Ing.

(57) **Zusammenfassung**

Es wird eine Vorrichtung vorgeschlagen zum Verdichten von körnigem Gut, insbesondere Mahlgut, wie gemahlenem Kaffee, in einem im wesentlichen waagerecht angeordneten Gehäuse (2) mittels einer unterhalb einer Einlaßöffnung (4) in einer Einlaßkammer (10) des Gehäuses angeordneten Förderschnecke (8) und einer koaxial zu der Förderschnecke (8) in einer mit der Einlaßkammer (10) über einen Durchlaß (20) in Verbindung stehenden zylindrischen Auslaßkammer (16) angeordneten, mit der Förderschnecke (8) drehfest verbundenen Schlägerwelle (14), die an einer Auslaßöffnung (18) in der Auslaßkammer (16) endet, wobei die Förderschnecke (8) und die Schlägerwelle (14) von einem Antriebsmotor (24) in Umlauf zu setzen ist und der freie Querschnitt der Auslaßöffnung (18) durch einen Stellantrieb (19) einstellbar ist. Es wird zum einen vorgeschlagen, daß die Einlaßöffnung (4) seitlich versetzt zu der die Achse (26) der Förderschnecke (8) enthaltenden Vertikalebene auf der Seite der beim Umlauf der Förderschnecke (8) ansteigenden Schneckengänge (28) angeordnet ist. Zum anderen wird vorgeschlagen, daß die Drehzahl des Antriebsmotors (24) in einem vorbestimmten Drehzahlbereich im wesentlichen stufenlos verstellbar ist und ein Auslaß-Steuerglied (72) vorgesehen ist, welches den Stellantrieb (19) zur Einstellung des freien Querschnitts der Auslaßöffnung (18) in Abhängigkeit der Drehzahl oder/und einer Änderung der Drehzahl des Antriebsmotors (24) betätigt.

## Beschreibung

Die Erfindung betrifft eine Vorrichtung zum Verdichten von körnigem Gut, insbesondere Mahlgut, wie gemahlenem Kaffee.

Eine derartige Vorrichtung wird beispielsweise dazu verwendet, Kaffeepulver nach dem Mahlvorgang und vor dem Abfüllen in Gebinde zu verdichten. Bei einer bekannten Vorrichtung findet das Verdichten in einem im wesentlichen waagerecht angeordneten Gehäuse statt, mittels einer unterhalb einer Einlaßöffnung in einer Einlaßkammer des Gehäuses angeordneten Förderschnecke und einer koaxial zu der Förderschnecke in einer mit der Einlaßkammer über einen Durchlaß in Verbindung stehenden, zylindrischen Auslaßkammer angeordneten, mit der Förderschnecke drehfest verbundenen Schlägerwelle, die über einer variablen Auslaßöffnung in der Auslaßkammer endet, wobei die Förderschnecke und die Schlägerwelle von einem Antriebsmotor in Umlauf zu setzen ist. Das zu verdichtende körnige Gut wird dabei der Einlaßöffnung zugeführt, dort von der Förderschnecke eingezogen und durch den Durchlaß in die Auslaßkammer gefördert. Die dort umlaufende Schlägerwelle führt neben einer Durchmischung des körnigen Guts auch zu einer Förderung desselben unter gleichzeitiger Verdichtung an die variable Auslaßöffnung. Über den mittels eines Stellantriebs veränderlichen freien Querschnitt der variablen Auslaßöffnung, durch welchen das körnige Gut verdichtet aus der Vorrichtung zum Verdichten austritt, kann der Verdichtungsgrad des körnigen Guts beim Durchlaufen der Vorrichtung beeinflußt werden, jedoch weist die bekannte Vorrichtung den Nachteil auf, daß der sich dabei einstellende Verdichtungsgrad in starkem Maße von der Förderleistung der Vorrichtung abhängig ist.

Es ist Aufgabe der Erfindung, eine Vorrichtung dieser Art anzugeben, die das körnige Gut auch bei sich verändernder Förderleistung besser auf vorgegebene Dichten verdichten kann.

Gemäß einem ersten Aspekt der vorliegenden Erfindung ist die Vorrichtung dadurch gekennzeichnet, daß die Einlaßöffnung seitlich versetzt zu der die Achse der Förderschnecke enthaltenden Vertikalebene auf der Seite, der beim Umlauf der Förderschnecke ansteigenden Schneckengänge angeordnet ist.

Durch den seitlichen Versatz der Einlaßöffnung zu der Seite der beim Umlauf der Förderschnecke ansteigenden Schneckengänge hin wird auch bei sehr hohen Drehzahlen der Förderschnecke und der Schlägerwelle, die zum raschen Betrieb der Vorrichtung erforderlich sind, insbesondere bei Drehzahlen bis zu und über 1200 Umdrehungen pro Minute, das zu verdichtende körnige Gut glatt und stauungsfrei eingezogen und auch bei schwankender Zu- und Abfuhr des körnigen Guts erfolgt eine gleichmäßige Verdichtung. Der Verdichtungsgrad ist auch im Dauerbetrieb innerhalb vergleichsweise enger Toleranzen konstant und es können somit Füllhöhen von abzufüllenden Gebinden innerhalb sehr enger Toleranzen eingestellt werden.

Gemäß einem zweiten Aspekt der vorliegenden Erfindung ist die Vorrichtung dadurch gekennzeichnet, daß die Drehzahl des Antriebsmotors in einem vorbestimmten Drehzahlbereich im wesentlichen stufenlos verstellbar ist und ein Auslaß-Steuerglied vorgesehen ist, welches den Stellantrieb zur Einstellung des freien Querschnitts der Auslaßöffnung in Abhängigkeit der Drehzahl oder/und einer Änderung der Drehzahl des Antriebsmotors betätigt.

Durch die im wesentlichen stufenlose Verstellung der Drehzahl des Antriebsmotors ist es möglich, die Förderleistung der Vorrichtung an körnigem Gut an den momentanen Bedarf, beispielsweise den Bedarf einer Gebinde-Abfüllstation, anzupassen. Zudem ermöglicht es das Auslaß-Steuerglied, den Betriebsbedingungen und auch sich ändernden Betriebsbedingungen der Vorrichtung Rechnung zu tragen und durch eine entsprechende Änderung des freien Querschnitts der Auslaßöffnung über den Stellantrieb eine von der Förderleistung weitgehend unabhängige konstante Verdichtung der Vorrichtung bereitzustellen. Das Auslaß-Steuerglied kann beispielsweise einen Tabellenspeicher aufweisen, aus welchem bei vorgegebenen Drehzahlen oder/und Drehzahländerungen des Antriebsmotors das Ausmaß einer für die Erzielung einer vorgegebenen Verdichtung notwendige Stellung des Stellantriebs zu entnehmen ist.

Besonders vorteilhaft ist es, die beiden Aspekte der vorliegenden Erfindung zu kombinieren und eine Vorrichtung vorzusehen, bei der die Einlaßöffnung seitlich versetzt zu der Vertikalebene auf der Seite der beim Umlauf der Förderschnecke ansteigenden Schneckengänge angeordnet ist, der Antriebsmotor im wesentlichen stufenlos verstellbar ist und der freie Querschnitt der Auslaßöffnung in Abhängigkeit von der Drehzahl oder/und einer Änderung der Drehzahl des Antriebsmotors durch das Auslaß-Steuerglied angepaßt wird. Dabei wird über die einstellbare Drehzahl des Antriebsmotors die Förderleistung der Vorrichtung eingestellt, der seitliche Versatz der Einlaßöffnung führt dazu, daß das körnige Gut unabhängig von der Förderleistung der Vorrichtung glatt und stauungsfrei eingezogen wird und die von der Drehzahl des Antriebsmotors abhängige Einstellung des freien Querschnitts der Auslaßöffnung führt damit bei variabler Förderleistung zu einem innerhalb enger Toleranzen konstanten Verdichtungsgrad. Die Förderleistung variiert dabei bei einer typischen Vorrichtung zwischen 600 und 1200 kg pro Stunde, bei Drehzahlen zwischen 300 und 1100 Umdrehungen pro Minute.

Bevorzugterweise ist die Einlaßöffnung parallel zur Achse der Förderschnecke langgestreckt, wodurch bei gegebenem Förderschneckendurchmesser gegenüber einer gedrungenen Ausführung der Einlaßöffnung ein vergrößerter Querschnitt zur Zuführung des zu verdichtenden körnigen Guts zur Verfügung steht. Ebenfalls bevorzugt ist es, den Querschnitt der Einlaßöffnung oval auszuführen, wodurch das körnige Gut bei vorgegebenem Querschnitt der Einlaßöffnung einer verhältnismäßig geringen Wandreibung ausgesetzt ist. Weiterhin ist vorgesehen, die Einlaßöffnung innen antistatisch zu beschichten, womit eine elektrostatische Aufladung des körnigen Guts, insbesondere bei sehr feinkörnigem Gut und hohen Förderleistungen, vermieden wird. Bevorzugterweise ist die Förderschnecke mit einem sich in Förderrichtung konisch verjüngenden Kern versehen, so daß mit zunehmender Förderstrecke auch ein zunehmender Förderquerschnitt der Schnecke zur Verfügung steht, was insbesondere in Verbindung mit der parallel zur Achse der Förderschnecke langgestreckten Einlaßöffnung zu einem glatten und stauungsfreien Einzug des körnigen Guts führt.

Eine besonders günstige Integrierbarkeit der Vorrichtung in einer Anlage zur Verarbeitung von körnigem Gut ist gegeben, wenn die Einlaßöffnung durch einen Einlaßkanal gebildet ist, in welchen sich die Einlaßkammer nach oben hin fortsetzt, wobei der Einlaßkanal zumindest in seinem der Förderschnecke nahen Bereich seitlich versetzt zu der Vertikalebene auf der Seite der beim Umlauf der Förderschnecke ansteigenden Schneckengänge angeordnet ist.

Besonders günstige Bedingungen für einen stauungsfreien Einzug des körnigen Guts sind dabei gegeben, wenn sich eine Wandung des Einlaßkanals in dem Bereich, welcher auf der Seite der beim Umlauf der Förderschnecke ansteigenden Schneckengange liegt, im Anschluß an die Einlaßöffnung von der Vertikalebene weg nach schräg oben, insbesondere unter einem Winkel von 5° bis 25° zur Senkrechten, erstreckt. Aus dem gleichen Grund ist es dabei günstig, wenn sich eine Wandung des Einlaßkanals in dem Bereich, welcher auf der Seite der beim Umlauf der Förderschnecke absteigenden Schneckengänge liegt, im Anschluß an die Einlaßöffnung auf die Vertikalebene zu nach schräg oben, insbesondere unter einem Winkel von 1° bis 10° zur Senkrechten, erstreckt.

Zu einer guten Durchmischung des körnigen Guts bei der Verdichtung und insbesondere bei der Verdichtung von gemahlenem Kaffee zu einer Zerkleinerung von in dem gemahlenem Kaffeepulver verbliebenen Kaffeehäutchen führt eine Anordnung von Nuten oder/und Rippen, welche an dem Zylinderinnenumfang der Auslaßkammer in Umfangsrichtung voneinander mit Abstand angeordnet sind und sich im wesentlichen in Axialrichtung erstrecken. Ein gutes Funktionieren der Vorrichtung und insbesondere die Vermeidung eines Rückstaus des zu verdichtenden körnigen Guts von der Auslaßkammer in die Einlaßkammer wird erreicht, wenn der Innendurchmesser der Auslaßkammer größer ist als der Innendurchmesser des Durchlasses von der Einlaßkammer zur Auslaßkammer.

Bevorzugterweise ist an der Auslaßkammer ein in Zylinderumfangsrichtung durch den Stellantrieb beweglicher Schieber vorgesehen, welcher die Auslaßöffnung abdeckt und mittels einer in dem Schieber vorgesehenen keilförmigen Öffnung den freien Querschnitt der Auslaßöffnung definiert. Hierdurch ist eine präzise Einstellung des freien Querschnitts der Auslaßöffnung auch während des Betriebs der Vorrichtung möglich.

Zur Einstellung der Drehzahl des Antriebsmotors ist bevorzugterweise ein Drehzahl-Steuerglied vorgesehen, welches die Drehzahl des Antriebsmotors in Abhängigkeit von einem die gewünschte Förderleistung der Vorrichtung charakterisierenden Förderleistungs-Sollsignal einstellt. Dabei wird bevorzugterweise das Förderleistungs-Sollsignal von einer Niveaufühleranordnung abgegeben, welche an einem Zwischenbehälter zur Aufnahme des von der Vorrichtung abgegebenen körnigen Guts vorgesehen ist und das Füllniveau des körnigen Guts in dem Zwischenbehälter erfaßt. Dabei kann das Förderleistungs-Sollsignal beispielsweise durch ein die Abweichung des Füllniveaus von einem Sollfüllniveau charakterisierendes Signal gegeben sein, da bei einem Absinken des Füllniveaus unter das Sollfüllniveau die Förderleistung der Vorrichtung zunehmen soll, und andererseits bei einem Ansteigen des Füllniveaus über das Sollfüllniveau die Förderleistung reduziert werden soll.

Zur Einstellung des freien Querschnitts der Auslaßöffnung ist bevorzugterweise ein Auslaß-Steuerglied vorgesehen, welches den freien Querschnitt in Abhängigkeit von einem Dichte-Sollsignal einstellt, welches die gewünschte Dichte des von der Vorrichtung abzugegebenden körnigen Guts charakterisiert. Insbesondere ist dabei vorgesehen, daß eine Gebinde-Abfüllstation das von der Vorrichtung abgegebene körnige Gut in einzelne Gebinde füllt. Das Dichte-Sollsignal wird dabei von einem Füllhöhensensor abgegeben, welcher die Füllhöhe des körnigen Guts in den Gebinden nach dem Befüllen durch die Gebinde-Abfüllstation erfaßt, da ein Füllniveau, welches unter einem vorgegebenen Soll-Füllniveau in den Gebinden liegt, durch eine Verringerung der Dichte des körnigen Guts und umgekehrt ein Füllniveau über dem Soll-Füllniveau durch eine Erhöhung der Dichte des körnigen Guts kompensiert werden kann.

Die Erfindung wird im folgenden unter Hinweis auf die beigefügten Zeichnungen erläutert. Hierbei zeigt:
- Figur 1: eine Vorrichtung zum Verdichten von körnigem Gut gemäß der vorliegenden Erfindung im Längsschnitt und schematisch integriert in einer Anlage zum Abfüllen von gemahlenem Kaffee in Gebinde und
- Figur 2: einen Schnitt entlang der Linie II-II durch das Gehäuse der Vorrichtung in Figur 1.

Die Zeichnungen zeigen eine Vorrichtung 1 zum Verdichten von gemahlenem Kaffee. Die Vorrichtung 1 weist ein kurzes, im wesentlichen waagerecht angeordnetes Gehäuse 2 auf. In dem Gehäuse 2 befindet sich unterhalb einer Einlaßöffnung 4 eine in einer Stirnwand 6 des Gehäuses 2 gelagerte Förderschnecke 8 in einer Einlaßkammer 10 des Gehäuses 2. Koaxial zu der Förderschnecke 8 ist in der der Stirnwand 6 gegenüberliegenden Stirnwand 12 eine Schlägerwelle 14 in einer zylindrischen Auslaßkammer 16 des Gehäuses 2 gelagert. Die Förderschnecke 8 und die Schlägerwelle 14 sind drehfest miteinander verbunden, können aber auch einstückig sein. Die Schlägerwelle 14 endet über einer Auslaßöffnung 18 der Auslaßkammer 16. Ein freier Querschnitt der Auslaßöffnung 18 ist durch einen Stellantrieb 19 verstellbar. Die Einlaßkammer 10 und die Auslaßkammer 16 stehen über einen Durchlaß 20 miteinander in Verbindung, der einen etwas größeren Durchmesser als die Förderschnecke 8 aufweist. Die Förderschnecke 8 ist über eine an ihr befindliche Kupplung 22 von einem Antriebsmotor 24 anzutreiben.

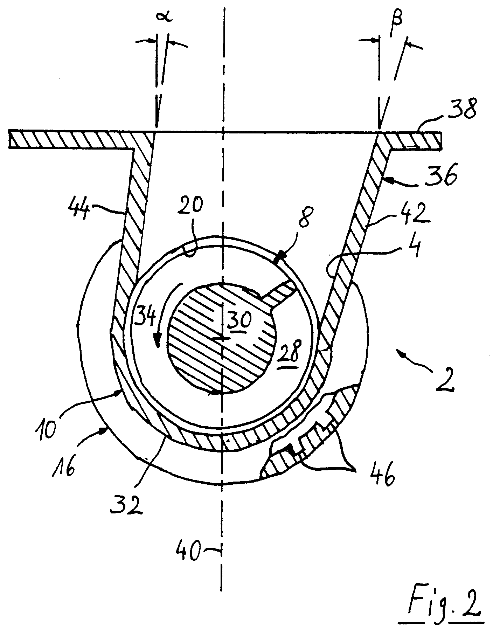

Die Einlaßkammer 10 umschließt in einem unteren Bereich 32 die Förderschnecke 8 zylindrisch mit Spiel, so daß sich die Förderschnecke frei drehen kann und das zu fördernde körnige Gut durch den zylindrischen Bereich 32 der Einlaßkammer 10 geführt wird. Die Förderschnecke 8 dreht sich im Betrieb in eine durch den Pfeil mit der Bezugsziffer 34 in Figur 2 gekennzeichnete Richtung, wobei ihr das zu fördernde körnige Gut durch einen Einlaßkanal 36 zugeführt wird. In diesen Einlaßkanal 36 setzt sich der untere Bereich 32 der Einlaßkammer 10 nach oben hin fort, wobei die Einlaßöffnung 4 durch den Einlaßkanal 36 gebildet ist. Nach oben ist der Einlaßkanal 36 durch einen im wesentlichen waagerecht ausgerichteten Flansch 38 abgeschlossen. Der Einlaßkanal 36 verläuft geneigt zu einer die Achse 26 der Förderschnecke enthaltenden Vertikalebene 40, so daß die Einlaßöffnung 4 relativ zu der Vertikalebene 40 versetzt angeordnet ist. Um die Neigung des Einlaßkanals 36 zu bilden, verläuft eine Wandung 42 des Einlaßkanals 36, welche auf der Seite der beim Umlauf der Förderschnecke 8 ansteigenden Schneckengänge 28 anschließt, von der Vertikalebene 40 weg, unter einem Winkel β von rund 20° zur Senkrechten nach schräg oben. Eine auf der Seite der beim Umlauf der Förderschnecke 8 absteigenden Schneckengänge 28 an die Einlaßöffnung 4 anschließende Wandung 44 des Einlaßkanals 36 verläuft unter einem Winkel α von rund 5° zur Senkrechten auf die Vertikalebene 40 zu nach schräg oben. Da sich die Wandungen 42 und 44 unter den Winkeln β bzw. α in gleiche Richtungen zur Senkrechten erstrecken, verläuft der Einlaßkanal 36 zum einen geneigt zur Senkrechten, zusätzlich ergibt sich dadurch, daß der Winkel β der Wandung 42 größer gewählt ist als der Winkel α der Wandung 44 eine trichterförmige Verjüngung des Einlaßkanals 36 von oben nach unten. Durch diese Anordnung des Einlaßkanals 36 und der Einlaßöffnung 4 ergibt sich eine besonders günstige Zuführung des körnigen Guts zu der Förderschnecke 8, so daß das körnige Gut von der Förderschnecke 8 glatt und stauungsfrei eingezogen wird.

Der glatte und stauungsfreie Einzug des körnigen Guts wird weiterhin dadurch unterstützt, daß der Einlaßkanal 36 innen antistatisch beschichtet und im horizontalen Querschnitt zur Achse 26 der Förderschnecke 8 langgestreckt oval ist. Zudem weist die Förderschnecke 8 einen sich in Förderrichtung konisch verjüngenden Kern 30 auf.

Die zylindrische Auslaßkammer 16 weist einen größeren Innendurchmesser auf als der zylindrische Bereich 32 der Einlaßkammer 10 sowie ebenfalls einen größeren Innendurchmesser als der Durchlaß 20 von der Einlaßkammer 10 zu der Auslaßkammer 16. Am Innenumfang der Auslaßkammer 16 ist eine Mehrzahl sich in Axialrichtung erstreckender Nuten 46 eingearbeitet. Diese Nuten 46 verhindern zum einen, daß sich das körnige Gut beim Umlauf der Schlägerwelle 14 geschlossen mitdreht, zum anderen führen die Nuten 46 zu einer weiteren Zerkleinerung von in dem gemahlenen Kaffee enthaltenen Kaffeehäutchen.

Die Auslaßöffnung 18 ist durch einen zylindrischen Schieber 48 verschließbar. Der Schieber 48 weist eine Öffnung 50 auf, die in Zylinderumfangsrichtung des Schiebers 48 keilförmig ist und den freien Querschnitt der Auslaßöffnung 18 definiert. Der Schieber 48 wird durch einen Stellantrieb 19 angetrieben, die daraus resultierende Verschiebung der keilförmigen Öffnung 50 über der Auslaßöffnung 18 ermöglicht die Einstellung des freien Querschnitts der Auslaßöffnung 18. Die Öffnung 50 in dem Schieber 48 weist dabei Begrenzungsränder 52 auf, von denen wenigstens einer kurvenförmig geschwungen ist, um den freien Querschnitt der Auslaßöffnung 18 gemäß einer vorbestimmten Charakteristik in Abhängigkeit von dem Verschiebeweg des Schiebers 48 einstellen zu können.

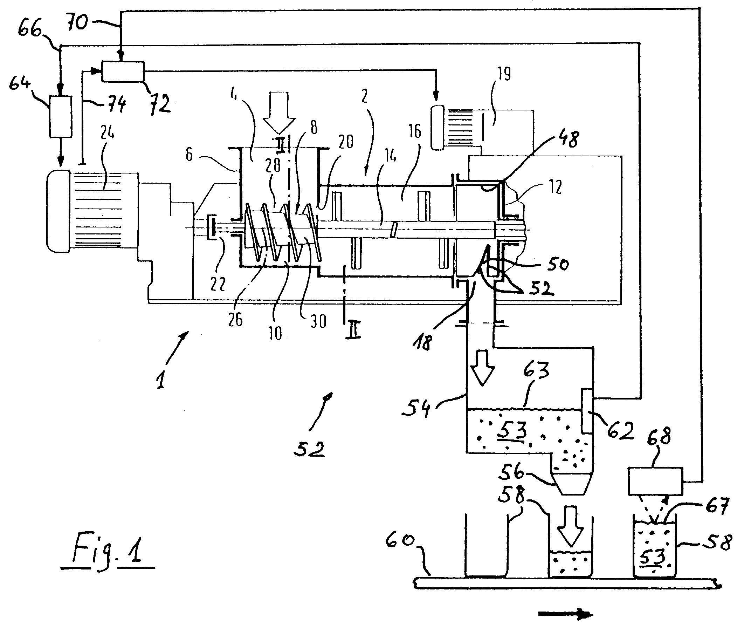

In Figur 1 ist die Vorrichtung 1 schematisch in eine Anlage 52 integriert dargestellt, welche aus einer nicht dargestellten Mühle austretenden gemahlenen Kaffee 53 in der Vorrichtung 1 verdichtet, in einem Zwischenbehälter 54 zwischenspeichert und von dort einer Gebinde-Abfüllstation 56 zuführt, welche den gemahlenen Kaffee in Gebinde 58 füllt, die auf einer Fördervorrichtung 60 an der Gebinde-Abfüllstation 56 vorbeigeführt werden. In dem Zwischenbehälter 54 ist eine Niveaufühleranordnung 62 angeordnet, welche ein Füllniveau 63 des gemahlenen und verdichteten Kaffees 53 in dem Zwischenbehälter 54 erfaßt. Wird durch die Gebinde-Abfüllstation 56 aus dem Zwischenbehälter 54 mehr gemahlener Kaffee 53 entnommen, als durch die Vorrichtung 1 zugeführt wird, so sinkt das Füllniveau 63 in dem Zwischenbehälter 54, wird durch die Gebinde-Abfüllstation 56 entsprechend weniger gemahlener Kaffee 53 entnommen, so steigt das Füllniveau 63. Um die Förderleistung der Vorrichtung 1 an den Bedarf der Gebinde-Abfüllstation 56 anzupassen, ist ein Drehzahl-Steuerglied 64 vorgesehen, welches die Drehzahl des kontinuierlich laufenden Antriebsmotors 24 in Abhängigkeit von dem Füllniveau 63 des gemahlenen Kaffees 53 in dem Zwischenbehälter 54 steuert. Das von der Niveaufühleranordnung 62 abgegebene Signal stellt somit ein Förderleistungs-Sollsignal 66 für die Vorrichtung 1 dar und wird dem Drehzahl-Steuerglied 64 zugeführt.

Die Gebinde-Abfüllstation 56 füllt eine gewichtsmäßig vorbestimmte Menge gemahlenen Kaffees 53, z. B. 500 g, in jedes der sich auf der Fördervorrichtung 60 an der Gebinde-Abfüllstation 56 vorbeibewegenden Gebinde 58. Um eine gleichbleibende Dichte des gemahlenen Kaffees 53 in den Gebinden 58 und damit eine gute Stapelbarkeit der Gebinde 58 zu erreichen, wird der Verdichtungsgrad des gemahlenen Kaffees 53 in der Vorrichtung 1 über den freien Querschnitt der Auslaßöffnung 18 eingestellt. Hierzu wird eine Füllhöhe 67 in den Gebinden 58 nach dem Befüllen durch die Gebinde-Abfüllstation 56 durch einen Füllhöhensensor 68 erfaßt. Das von dem Füllhöhensensor 68 in Abhängigkeit von der Füllhöhe 67 in den Gebinden 58 abgebene Meßsignal stellt somit ein Dichte-Sollsignal 70 dar, welches einem Auslaß-Steuerglied 72 zugeführt wird. Das Auslaß-Steuerglied 72 betätigt den Stellantrieb 19 zur Einstellung des freien Querschnitts der Auslaßöffnung 18.

Da sich z. B. bei Änderungen der Förderleistung der Vorrichtung 1 die Dichte des von der Vorrichtung 1 abgegebenen gemahlenen Kaffees 53 zumindest geringfügig ändert, wird dem Auslaß-Steuerglied 72 neben dem Dichte-Sollsignal 70 auch ein von der Drehzahl des Antriebsmotors 24 abhängiges Drehzahlsignal 74 zugeführt, so daß das Auslaß-Steuerglied 72 bei Änderungen der Förderleistung der Vorrichtung 1 auf die Dichte des abgegebenen gemahlenen Kaffees 53 korrigierend eingreifen kann, bevor der bei geänderter Förderleistung abgegebene gemahlene Kaffee 53 erst den Zwischenbehälter 54 und die Gebinde-Abfüllstation 56 durchlaufen hat und die Füllhöhe in den befüllten Gebinden 58 durch den Füllhöhensensor 68 erfaßt ist.

Die vorangehend beschriebene Steuerung der Vorrichtung hinsichtlich der Drehzahl des Antriebsmotors und des freien Querschnitts der Auslaßöffnung ermöglicht eine präzise und von der Förderleistung der Vorrichtung unabhängige Einstellung der Dichte des abgegebenen körnigen Guts und damit eine präzise Einstellung der Füllhöhe in den befüllten Gebinden innerhalb enger Toleranzen. In Verbindung mit der seitlich versetzten Einlaßöffnung ist damit ein Betrieb der Vorrichtung selbst unter stark schwankender Förderleistung möglich und die Vorrichtung zum Verdichten von körnigem Gut kann damit flexibel in Anlagen zum Befüllen von Gebinden eingesetzt werden, wobei diese Anlagen insbesondere auch mit einem stark verkleinerten Zwischenbehälter ausgestattet sein oder gänzlich ohne Zwischenbehälter betrieben werden können. Es ist insbesondere auch vorgesehen, ohne Erfassung des Dichte-Sollsignals durch den Füllhöhensensor, die Dichte des von der Vorrichtung abgegebenen körnigen Guts durch eine Steuerung des freien Querschnitts der Auslaßöffnung alleine in Abhängigkeit von der Drehzahl des Antriebsmotors zu steuern. Andererseits ist es auch denkbar, den Querschnitt der Auslaßöffnung in Abhängigkeit von Ausgangssignalen der Niveaufühleranordnung so zu regeln, daß sich die Förderleistung der Vorrichtung an die Leistung der Abfüllvorrichtung anpaßt.

## Patentansprüche

1. Vorrichtung zum Verdichten von körnigem Gut, insbesondere Mahlgut, wie gemahlenem Kaffee (53), in einem insbesondere kurzen, im wesentlichen waagerecht angeordneten Gehäuse (2) mittels einer unterhalb einer Einlaßöffnung (4) in einer Einlaßkammer (10) des Gehäuses (2) angeordneten Förderschnecke (8) und einer koaxial zu der Förderschnecke (8) in einer mit der Einlaßkammer (10) über einen Durchlaß (20) in Verbindung stehenden zylindrischen Auslaßkammer (16) angeordneten, mit der Förderschnecke (8) drehfest verbundenen Schlägerwelle (14), die an, insbesondere über einer Auslaßöffnung (18) in der Auslaßkammer (16) endet, wobei die Förderschnecke (8) und die Schlägerwelle (14) von einem Antriebsmotor (24) in Umlauf zu setzen ist,
**dadurch gekennzeichnet,**
daß die Einlaßöffnung (4) seitlich versetzt zu der die Achse (26) der Förderschnecke (8) enthaltenden Vertikalebene (40) auf der Seite der beim Umlauf der Förderschnecke (8) ansteigenden Schneckengänge (28) angeordnet ist.

2. Vorrichtung nach Anspruch 1 oder dem Oberbegriff von Anspruch 1, dadurch gekennzeichnet, daß der freie Querschnitt der Auslaßöffnung (18) durch einen Stellantrieb (19) einstellbar ist, und daß die Drehzahl des Antriebsmotors (24) in einem vorbestimmten Drehzahlbereich, insbesondere zwischen 300 U/min und 1100 U/min, im wesentlichen stufenlos verstellbar ist und ein Auslaß-Steuerglied (72) vorgesehen ist, welches den Stellantrieb (19) zur Einstellung des freien Querschnitts der Auslaßöffnung (18) in Abhängigkeit der Drehzahl oder/und einer Änderung der Drehzahl des Antriebsmotors (24) betätigt.

3. Vorrichtung nach Anspruch 1 oder 2, dadurch gekennzeichnet, daß die Einlaßöffnung (4) parallel zur Achse (26) der Förderschnecke (8) langgestreckt ist.

4. Vorrichtung nach einem der Ansprüche 1 bis 3, dadurch gekennzeichnet, daß die Einlaßöffnung (4) oval ist.

5. Vorrichtung nach einem der Ansprüche 1 bis 4, dadurch gekennzeichnet, daß die Einlaßöffnung (4) innen antistatisch beschichtet ist.

6. Vorrichtung nach einem der Ansprüche 1 bis 5, dadurch gekennzeichnet, daß die Förderschnecke (8) einen sich in Förderrichtung konisch verjüngenden Kern (30) aufweist.

7. Vorrichtung nach einem der Ansprüche 1 bis 6, dadurch gekennzeichnet, daß sich die Einlaßkammer (10) nach oben hin in einen die Einlaßöffnung (4) bildenden Einlaßkanal (36) fortsetzt, der zumindest in seinem der Förderschnecke (8) nahen Bereich seitlich versetzt zu der die Achse (26) der Förderschnecke (8) enthaltenden Vertikalebene (40) auf der Seite der beim Umlauf der Förderschnecke (8) ansteigenden Schneckengänge (28) angeordnet ist.

8. Vorrichtung nach Anspruch dadurch gekennzeichnet, daß sich eine Wandung (42) des Einlaßkanals (36) in ihrem auf der Seite der beim Umlauf der Förderschnecke (8) ansteigenden Schneckengänge (28) an die Einlaßöffnung (4) anschließenden Bereich von der Vertikalebene (40) weg nach schräg oben, insbesondere unter einem Winkel (β) von 5° bis 25° zur Senkrechten, erstreckt.

9. Vorrichtung nach Anspruch 7 oder 8, dadurch gekennzeichnet, daß sich eine Wandung (44) des Einlaßkanals (36) in ihrem auf der Seite der beim Umlauf der Förderschnecke (8) absteigenden Schneckengänge (28) an die Einlaßöffnung (4) anschließenden Bereich auf die Vertikalebene (40) zu nach schräg oben, insbesondere unter einem Winkel (α) von 1° bis 10° zur Senkrechten, erstreckt.

10. Vorrichtung nach einem der Ansprüche 1 bis 9, dadurch gekennzeichnet, daß die Auslaßkammer (16) an ihrem Zylinderinnenumfang mit einer Mehrzahl in Umfangsrichtung voneinander mit Abstand angeordneter, im wesentlichen in Axialrichtung sich erstreckender Nuten (46) oder/und Rippen versehen ist.

11. Vorrichtung nach einem der Ansprüche 1 bis 10, dadurch gekennzeichnet, daß der Innendurchmesser der Auslaßkammer (16) größer ist als der Innendurchmesser des Durchlasses (20) der Einlaßkammer (10) zu der Auslaßkammer (16).

12. Vorrichtung nach einem der Ansprüche 1 bis 11, dadurch gekennzeichnet, daß zur Einstellung des wirksamen Querschnitts der Auslaßöffnung (18) an der Auslaßöffnung (18) ein in Zylinderumfangsrichtung der Auslaßkammer (16) beweglicher Schieber (48) mit einer keilförmigen Öffnung (50) vorgesehen ist, welcher durch den Stellantrieb (19) betätigt wird.

13. Vorrichtung nach einem der Ansprüche 1 bis 12, dadurch gekennzeichnet, daß ein Drehzahl-Steuerglied (64) vorgesehen ist, welches die Drehzahl des Antriebsmotors (24) in Abhängigkeit von einem die gewünschte Förderleistung der Vorrichtung (1) charakterisierenden Förderleistungs-Sollsignal (66) einstellt.

14. Vorrichtung nach Anspruch 13, dadurch gekennzeichnet, daß ein Zwischenbehälter (54) zur Aufnahme des von der Vorrichtung (1) abgegebenen körnigen Guts (53) mit einer Niveaufühleranordnung (62) vorgesehen ist, wobei die Niveaufühleranordnung (62) das von einem Füllniveau (63) des körnigen Guts (53) in dem Zwischenbehälter (54) abhängiges Förderleistungs-Sollsignal (66) abgibt.

15. Vorrichtung nach einem der Ansprüche 1 bis 14, dadurch gekennzeichnet, daß ein Auslaß-Steuerglied (72) vorgesehen ist, welches den wirksamen Querschnitt der Auslaßöffnung (18) in Abhängigkeit von einem die gewünschte Dichte des von der Vorrichtung abgegeben körnigen Guts (53) charakterisierenden Dichte-Sollsignal (70) einstellt.

16. Vorrichtung nach Anspruch 15, dadurch gekennzeichnet, daß eine Gebinde-Abfüllstation (56) mit einem Füllhöhensensor (68) vorgesehen ist, welche das von der Vorrichtung (1) abgegebene körnige Gut (53) in einzelne Gebinde (58) füllt, wobei der Füllhöhensensor (68) das von einer Füllhöhe (67) des körnigen Guts (53) in den Gebinden (58) nach dem Befüllen durch die Gebinde-Abfüllstation (56) abhängiges Dichte-Sollsignal (70) abgibt.
